Europäisches Patentamt

European Patent Office

Office européen des brevets

(11) Veröffentlichungsnummer: **0 477 597 A2**

## EUROPÄISCHE PATENTANMELDUNG

(21) Anmeldenummer: **91114773.4**

(22) Anmeldetag: **02.09.91**

(51) Int. Cl.5: **G06F 9/38**

(30) Priorität: **26.09.90 DE 4030439**

(43) Veröffentlichungstag der Anmeldung:
**01.04.92 Patentblatt 92/14**

(84) Benannte Vertragsstaaten:
**AT DE ES FR GB IT NL**

(71) Anmelder: **SIEMENS AKTIENGESELLSCHAFT**
**Wittelsbacherplatz 2**
**W-8000 München 2(DE)**

(72) Erfinder: **Wahr, Alfons-Josef, Dipl.-Ing.**
**Pucher Strasse 52**
**W-8080 Fürstenfeldbruck(DE)**

(54) **Verfahren zu parallelen Verarbeitung von Befehlen eines Programms und Prozessor zur Durchführung des Verfahrens.**

(57) In einem Prozessor sind ein n Prozessorelemente vorgesehen, die selbsttätig Befehle ausführen können. Die Prozessorelemente (PE) sind jeweils mit einem Befehlswerk (IU), einem Cachespeicher (CA) verbunden. Über das Befehlswerk werden den Prozessorelementen (PE) parallel die zu bearbeitenden Befehle zugeführt; jedes Prozessorelement bearbeitet seinen Befehl selbstständig. Sollte sich ergeben, daß die Bearbeitung eines Befehls die vorherige Bearbeitung eines anderen Befehles erfordert, wird entweder vom Befehlswerk (IU) oder von dem Prozessorelement (PE), das den vorhergehenden Befehl bearbeitet, ein Konfliktsignal (K) erzeugt, das den niederprioren Prozessorelementen zugeführt wird und das deren Tätigkeit solange stoppt, bis das Prozessorelement den vorhergehenden Befehl bearbeitet hat.

FIG 2

EP 0 477 597 A2

In der Rechnerarchitektur sind SIMD (Single-Instruction-Multi-Data)-Rechner, Vektorrechner und MIMD (Multi-Instruction-Multi-Data)-Rechner bekannt. Diese zeichnen sich dadurch aus, daß sie als Multiprozessorsysteme oder Parallelrechner realisiert sein können und deshalb im kleinen oder im großen Prozeßabschnitte oder ganze Prozesse parallel abwickeln können. Zwischen den Synchronisationspunkten werden oft Hunderte bis mehrere Millionen von Maschinenbefehlen bearbeitet.

Bei derartigen Rechnersystemen müssen Konflikte erkannt werden, die z.B. dann bestehen, wenn die Bearbeitung eines Befehles die vorherige Bearbeitung eines vorausgehenden Befehles erfordert. Solche Konfliktfälle werden z.B. vom Compiler erkannt und dann das Programm in parallelablauffähige konfliktfreie Programmteile aufgeteilt. Die parallele Bearbeitung eines Programms erfordert somit eine spezielle Aufbereitung durch z.B. Compiler, Codegeneratoren oder sonstige Programme.

Die der Erfindung zugrundeliegende Aufgabe besteht darin, ein Verfahren und einen Prozessor anzugeben, mit dem ein Programm parallel verarbeitet werden kann, ohne daß zusätzliche Aufbereitungsprogramme erforderlich sind. Diese Aufgabe wird gemäß dem im Anspruch 1 angegebenen Verfahren gelöst. Ein Prozessor zur Durchführung des Verfahrens ergibt sich aus Anspruch 12.

Der Prozessor zur parallelen Bearbeitung eines Programms besteht somit aus einer Mehrzahl von Prozessorelementen, die als CPU oder Rechenwerk realisiert sein können. Wenn z.B. n (n ganze Zahl) Prozessorelemente im Prozessor realisiert sind, dann können maximal n Befehle parallel bearbeitet werden.

Wenn die Bearbeitungszeit der Prozessorelemente unterschiedlich ist, dann ist es zweckmäßig, den Prozessorelementen, die mit der Bearbeitung bereits fertig sind, einen neuen Befehl zuzuführen, während die übrigen Prozessorelemente noch arbeiten. Somit sollte dann die Befehlszuweisung dynamisch erfolgen.

Konfliktfälle, wie einem Zugriff zu einer gemeinsamen Resource, z.B. Zugriff zu einem Speicher oder einem Register, dessen Wert durch einen vorausgehenden Befehl erst noch abzulegen ist, können dadurch gelöst werden, daß solche Befehle erkannt werden und entsprechende Konfliktsignale den Prozessorelementen zugeführt werden. Dazu ist es zweckmäßig, daß den einzelnen Prozessorelementen Prioritäten zugeordnet werden. Tritt ein solcher Konfliktfall auf, bearbeitet ein Prozessorelement z.B. einen Befehl, bei dem ein Schreibzugriff zu einem Register oder zum Speicher erfolgt, dessen Inhalt von nachfolgenden Befehlen benutzt wird, dann wird dieses Konfliktsignal erzeugt und den Niederprioren Prozessorelemente zugeleitet; die betroffenen Prozessorelemente warten mit ihrer Befehlsbearbeitung solange, bis der Schreibzugriff durchgeführt worden ist.

Konfliktfälle können selbstverständlich auch bei der Befehlsdecodierung erkannt werden, z.B. kann eine Vordecodierung erfolgen, um derartige Befehlskonfliktsituationen festzustellen.

Ein Prozessor mit mehreren Prozessorelementen hat weiterhin den Vorteil, daß es möglich ist, bei Verzweigungsbefehlen die Befehle der Zweige unterschiedlichen Prozessorelementen zuzuweisen, um mit der Befehlsbearbeitung bereits beginnen zu können, bevor überhaupt festgestellt ist, welcher Befehlszweig durchlaufen wird. Auf diese Weise wird die Bearbeitung des Programms beschleunigt.

Die pro Taktschritt des Prozessors tätigen Prozessorelemente können variieren, z.B. in Abhängigkeit der parallel zu bearbeitenden Befehle. Dann werden die nicht aktiven Prozessorelemente z.B. durch einen NOOP-Befehl in den Wartezustand überführt.

Ein Prozessor zur Durchführung des Verfahrens muß dann n-Prozessorelemente aufweisen. Die Prozessorelemente sind alle mit einem Befehlswerk, einer Cachespeichereinrichtung mit Cache, einer Registerbank und eventuell einem Steuerspeicher verbunden. Die Konfliktsignale können von den einzelnen Prozessorelementen erzeugt werden und in Abhängigkeit der Anzahl der tätigen Prozessorelemente von den höherprioren Prozessorelementen zu den niederprioren Prozessorelementen übertragen werden. Wenn einige Prozessorelemente nicht tätig sind, dann muß diesen Prozessorelementen das Konfliktsignal nicht zugeführt werden. Durch entsprechende Einfügung von Multiplexern in die Leitungen für die Konfliktsignale ist es möglich, einzelne Prozessorelemente zu umgehen.

Andere Weiterbildungen der Erfindung ergeben sich aus den Unteransprüchen.

Anhand von Ausführungsbeispielen, die in den Figuren dargestellt sind, wird die Erfindung weiter erläutert. Es zeigen

Figur 1      das Prinzipschaltbild eines Mehrprozessorrechners,

Figur 2      die innere Architektur eines Prozessor mit vier Prozessorelementen,

Figur 3      die innere Prozessorarchitektur mit vier Prozessorelementen bei dynamisch veränderlicher Anzahl von aktiven Prozessorelementen,

Figur 4      die Prozessorarchitektur für die Bearbeitung beider Alternativen bei bedingten Befehlen,

Figur 5      die Prozessorarchitektur für die Bearbeitung beider Alternativen bei bedingten Befehlen, wobei ein zusätzliches Prozessorelement vorgesehen ist.

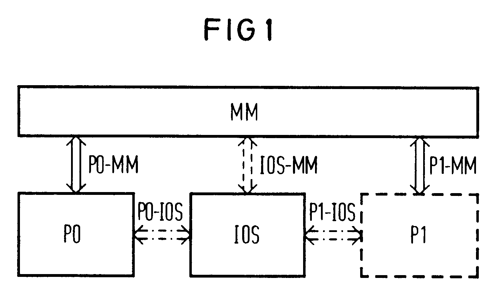

Figur 1 zeigt die Architektur eines Bi-Befehlsprozessors, wie er heute üblich ist. Es sind z.B. zwei Prozessoren P0 und P1 vorgesehen, die über Busse P1-MM und P0-MM (allgemein PI-MM) mit einem Hauptspeicher MM verbunden sind. Der Verkehr mit der Außenwelt (Peripherie) wird über einen Ein/Ausgabebus P0-IOS bzw. P1 - IOS zu den peripheren Einheiten IOS durchgeführt. Die peripheren Einheiten IOS können ebenfalls z.B. über einen IOS-MM Bus mit dem Hauptspeicher verbunden sein. Eine solche Rechnerarchitektur ist bekannt und braucht somit nicht weiter diskutiert zu werden.

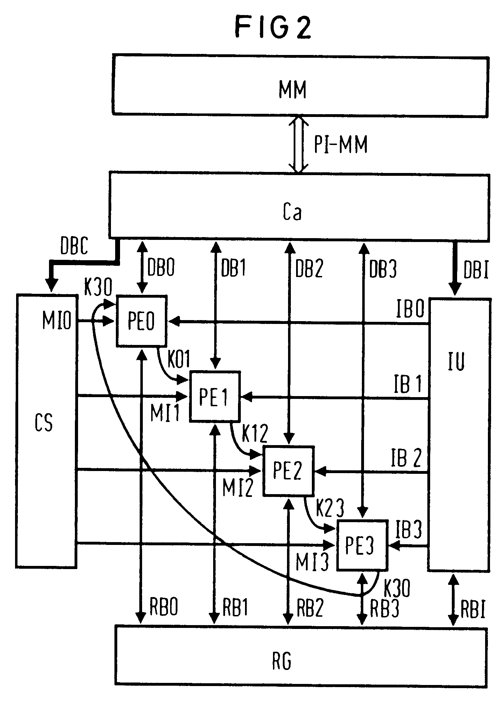

Zur parallelen Bearbeitung eines Programms wird nun die übliche Architektur der Prozessoren P0, P1 gemäß Figur 2 geändert. Ein Prozessor enthält jetzt nicht nur ein Prozessorelement, also eine CPU, sondern n Prozessorelemente, wobei n eine ganze Zahl ist. Im Ausführungsbeispiel der Figur 2 sind vier Prozessorelemente PE0 bis PE3 vorgesehen. Jedes Prozessorelement PE kann einen Befehl eigenständig bearbeiten, weist also die üblichen Einheiten auf, die zu einer Befehlsbearbeitung erforderlich sind. Jedes Prozessorelement PE ist mit einem Befehlswerk IU über Befehlsbusse IB0 bis IB3 verbunden. Weiterhin besteht ein Datenbus DB0 bis DB3 mit einer Cachespeichereinrichtung CA, die auf übliche Weise über einen Bus PI-MM mit dem Hauptspeicher MM verbunden ist. Die Cachespeichereinrichtung kann einem Multiport-Cachespeicher enthalten, es wäre jedoch auch möglich, pro Prozessorelement PE einen eigenen Cachespeicher vorzusehen.

Wenn der Prozessor mikroprogrammiert ist, dann muß ein Steuerspeicher CS für die Mikroprogramme der Prozessorelemente PE vorgesehen sein. Auch hier würde dann jedes Prozessorelement PE über einen getrennten Bus MI0 bis MI3 mit dem Steuerspeicher CS verbunden sein. Der Steuerspeicher CS könnte wiederum als Multiport-Steuerspeicher realisiert sein oder pro Prozessorelement PE könnte ein getrennter Steuerspeicher vorgesehen sein. Schließlich könnten die Prozessorelemente PE0 bis PE3 über getrennte Busse RB0 bis RB3 mit einer Registerbank RG verbunden sein, die als Multiportregisterbank realisiert sein kann.

Das Befehlswerk IU kann über einen Datenbus DBI mit der Cachespeichereinrichtung CA verbunden sein und über einen Bus RBI mit der Registerbank RG.

Die zu bearbeitenden Befehle eines Programms können von der Cachespeichereinrichtung CA auf übliche Weise über den Bus DBI in das Befehlswerk IU übertragen werden. Dazu kann im Befehlswerk IU auf bekannte Weise ein Befehlszähler IC vorhanden sein. Die Befehle werden dort decodiert und werden dann über die Befehlsbusse IB0 bis IB3 getrennt auf die einzelen Prozessorelemente PE0 bis PE3 verteilt. Da die Prozessorelemente PE selbstständig voneinander arbeiten können, ist es möglich, daß parallel im Ausführungsbeispiel vier Befehle gleichzeitig bearbeitet werden. Die zur Bearbeitung der Befehle erforderlichen Daten werden von den Prozessorelementen PE0 bis PE3 über die Datenbusse DB0 bis DB3 aus der Cachespeichereinrichtung CA auf übliche Weise geholt bzw. bearbeitete Daten über die Datenbusse DB in die Cachespeichereinrichtung CA übertragen. Bei der Befehlsdurchführung erforderliche Registerzugriffe erfolgen über die Registerbusse RB0 bis RB3 zur Registerbank RG. Sind die Prozessorelemente PE mikroprogrammiert, dann sind zur Bearbeitung der Befehle Mikroprogramme erforderlich, die im Steuerspeicher CS stehen und von dort über die Mikrobefehlsbusse MI0 bis MI3 in die zugeordneten Prozessorelement übertragen werden, wenn nicht pro Prozessorelement ein eigener Steuerspeicher vorgesehen ist.

Mit dem Prozessor können besonders gut Programme mit konstanter Befehlslänge parallel bearbeitet werden. Günstig ist es dabei, wenn die Befehlsbreite gleich oder kleiner als die Wortbreite ist. Bei dynamisch variabler Befehlslänge ist der Prozessor ebenfalls zweckmäßig, jedoch muß vom Befehlswerk IU die Befehlssequenz stets dynamisch richtig selektiert und ausgerichtet den Prozessorelementen PE übergeben werden.

Die Prozessorelemente PE werden immer parallel mit einem Satz von Befehlen versorgt. Diese Befehle werden parallel ausgeführt, soweit dies nicht durch Konfliktsituationen verhindert wird. Die Reihenfolge und damit die Priorität für die Abarbeitung der Befehle in Konfliktsituationen ist im Ausführungsbeispiel von links nach rechts angegeben, also von PE0 mit höchster Priorität bis zu PE3 mit niedrigster Priorität. Selbstverständlich kann die Verteilung der Prioritäten auch anders erfolgen; sie hat aber immer in der Reihenfolge der Befehlssequenz zu erfolgen.

Es ist auch möglich, daß die Prozessorelemente PE dynamisch, also immer, wenn möglich mit einem neuen Befehl versorgt werden. Dann rotiert die Priorität der Befehlsbearbeitung mit der Befehlsvollendung. Wenn also z.B. das Prozessorelement PE1 mit seiner Befehlsbearbeitung bereits fertig ist, während die übrigen Prozessorelemente PE0, PE2, PE3 noch tätig sind, dann könnte das Prozessorelement PE2 die höchste Befehlsbearbeitungspriorität erhalten und PE1 bereits mit einem neuen Befehl versorgt werden usw..

Wenn nicht alle Prozessorelemente für die Bearbeitung von Befehlen benötigt werden, dann kann das Befehlswerk IU für die nicht benötigen Prozessorelemente ein disable-Signal erzeugen und diese in den Wartezustand versetzen. Dies kann z.B.

auch über sog. NOOP-Befehle erfolgen.

Wenn Konflikt-Situationen zwischen den Befehlen auftreten, dann müssen sie behandelt werden. Solche Konfliktsituationen sind immer dann gegeben, wenn die Bearbeitung eines Befehles die vorherige Bearbeitung eines vorhergehenden Befehles im Programm erfordert. Solche Konfliktsituationen können erkannt werden bei Registerergebnisberechnung parallel zu dessen Ergebnisverwendung oder bei Bearbeitung von Operanden parallel zur Verwendung der Ergebnisse der Operandenbearbeitung. Solche Konfliktsituationen können im Befehlswerk durch Befehlsvordecodierung erkannt werden, es ist aber auch möglich, daß die einzelnen Prozessorelemente PE eine solche Konfliktsituation erkennen und für diesen Fall ein Konfliktsignal Ki (i + l) (i = 0,1...) erzeugen, das den niedrigprioren Prozessorelementen zugeführt wird. Die Weitergabe von Konfliktsignalen K an die niederprioren Prozessorelemente ist in Figur 2 symbolisch dargestellt. Immer wenn ein Prozessorelement PE z.B. das Prozessorelement PE0 feststellt, daß es einen Befehl bearbeitet, der z.B. einen Schreibzugriff zur Cacheeinrichtung oder zur Registerbank erfordert und damit eine Konfliktsituation erzeugen kann, gibt das Prozessorelement PE0 ein Konfliktsignal KO1 an das niederpriore Prozessorelement PE1 und an alle niederprioren Prozeßelemente PE2, PE3 ab. Diese Prozessorelemente müssen dann solange mit der Bearbeitung ihres Befehles warten, wenn sie dieselbe Resource wie PE0 verwenden, bis das höherpriore Prozessorelement seine Befehlsbearbeitung beendet hat und damit das Konfliktsignal KO1 verschwunden ist. Die Übertragung der Konfliktsignale zu den Prozessorelementen kann z.B. über einen Bus erfolgen.

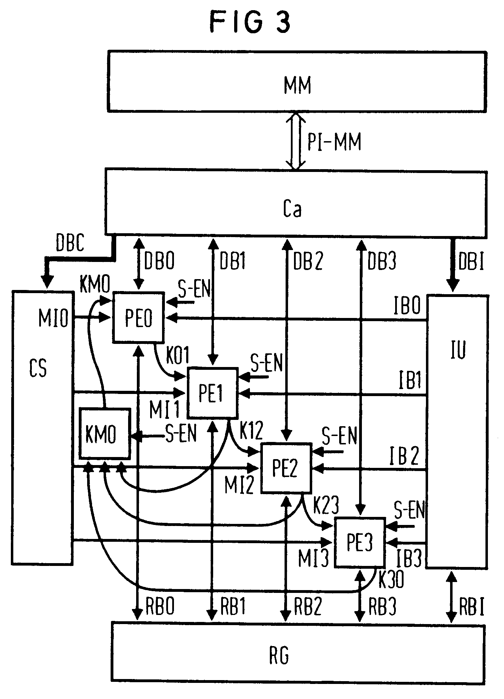

In Figur 3 wird der Prozessor erweitert um einen Multiplexer KM0. Durch diesen Multiplexer KM0 kann festgelegt werden, welches Konfliktsignal K eines höherprioren Prozessorelementes zum Prozessorelement PE0 übertragen werden soll. Dazu wird dem Multiplexer KM0 z.B. vom Befehlswerk IU ein Schaltsignal S-EN zugeführt. Auf diese Weise ist es möglich, pro Taktschritt des Prozessors die Anzahl der aktiven Prozessorelemente zu variieren. Wenn also z.B. im Befehlswerk IU weniger als n Befehle, z.B. j (j ≤ n) Befehle vorhanden sind, dann werden in einem Taktschritt nur die Prozessorelemente P0 bis PEj-1 aktiviert, z.B. durch ein enable-Signal S-EN vom Befehlswerk IU. Jetzt ist es erforderlich, daß dem ersten Prozessorelement PE0 das richtige Konfliktsignal zugeführt wird. Mit Hilfe des Multiplexers KM0 kann das entsprechende Konfliktsignal K ausgewählt werden.

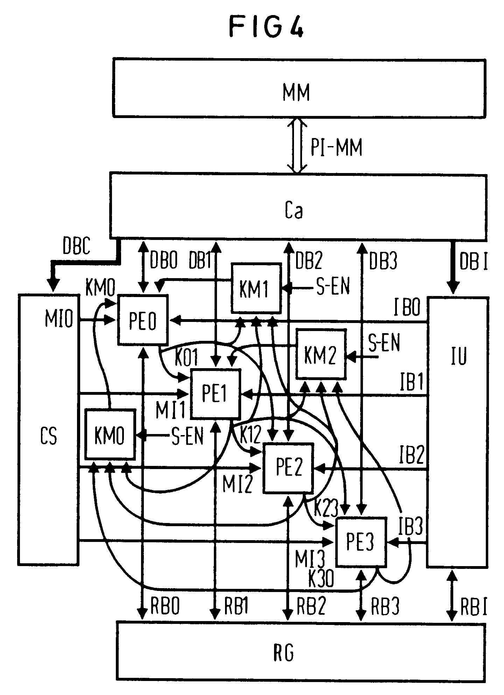

Eine weitere Weiterbildung des Prozessors ergibt sich aus Figur 4. Hier sind zusätzlich zum Multiplexer KM 0 Multiplexer KM1 und KM2 vorgesehen, die es erlauben, dem Prozessorelement PE0 und PE1 durch die Multiplexer auswählbare Konfliktsignale anderer Prozessorelemente zuzuführen. Die Architektur der Figur 4 ist dann zweckmäßig, wenn bedingte Befehle auszuführen sind. Bei bedingten Sprunganweisungen, bei bedingten Prozeduraufrufen und bedingten Rücksprüngen bei Schleifenbefehlen können als Programmfortsetzung zwei Alternativen in Frage kommen. In Abhängigkeit der Bedingung des bedingten Befehles folgen entweder Befehle eines ersten Zweiges oder eines zweiten Zweiges. In diesem Fall können die Befehle der beiden Zweige parallel in die nachfolgenden Prozessorelemente gebracht werden und damit die Ausführung eines Programmes beschleunigt werden. Wenn z.B. ein solcher bedingter Befehl im Prozessorelement PE0 ausgeführt wird, dann können die zwei folgenden Prozessorelemente PE1 und PE2 mit jeweils einem Befehl eines Zweiges geladen werden. Dementsprechend wird das Konfliktsignal des Prozessorelementes PE0 dem Prozessorelement PE1 und PE2 direkt zugeführt werden. Dasselbe gilt, wenn ein anderes Prozessorelement PE einen bedingten Befehl ausführt. In Figur 4 ist erkennbar, daß die Konfliktsignale K jedes Prozessorelementes jeweils zwei niederprioren Prozessorelementen zugeführt werden, wobei über die Multiplexer KM die Prozessorelemente PE, denen das Konfliktsignal zugeführt wird, auswählbar sind.

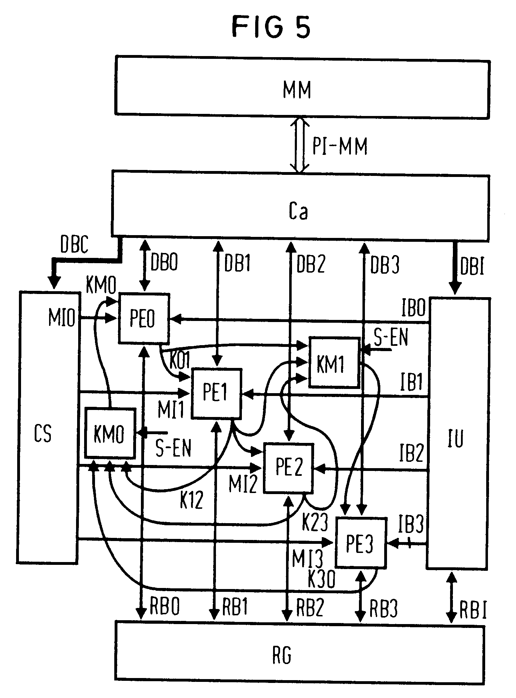

Eine günstige Lösung besteht auch dann, wenn für diese Situation ein zusätzliches Prozessorelement hinzugenommen wird oder bei dynamischer Anzahl der verwendeten Prozessorelemente, wenn hierfür das niedrigstpriore Prozessorelement eingesetzt wird, da dieses mit größerer Wahrscheinlichkeit nicht verwendet wird. Dieser Fall ist in Figur 5 gezeigt, hier wird in das Prozessorelement PE3 bei einem bedingten Befehl der erste Befehl des zweiten Zweiges geladen. Dementsprechend wird dem Prozessorelement PE3 über den Multiplexer KM1 das Konfliktsignal der übrigen Prozessorelemente zugeführt.

Die in den Figuren dargestellten Prozessoren enthalten Einheiten bekannten Aufbaus, wie z.B. ein Befehlswerk IU, einen Cachespeicher CA, einen Steuerspeicher CS und eine Registerbank RG und Prozessorelemente PE. Auf den Aufbau und die Funktion dieser Einheiten braucht deshalb nicht eingegangen zu werden.

**Patentansprüche**

1. Verfahren zur parallelen Bearbeitung der Befehle eines Programms durch einen Prozessor mit folgenden Schritten:
    - jeweils k (k≤n) Befehle des Programms werden parallel n Prozessorelementen (PE) des Prozessors in Abhängigkeit deren Priorität zur Bearbeitung zugeführt, jeweils ein Befehl pro Prozessorelement,

- jedes Prozessorelement (PE) bearbeitet eigenständig seinen Befehl,
- wenn bei Bearbeitung eines Befehls durch ein Prozessorelement auf eine Resource zugegriffen wird, dann wird dies den nachfolgenden niederprioren Prozessorelementen mit einem Konfliktsignal (K) mitgeteilt,
- muß ein niederpriores Prozeessorelement auf diese Resource zugreifen, dann muß es solange warten, bis das höherpriore Prozessorelement seinen Zugriff abgeschlossen hat.

2. Verfahren nach Anspruch 1,
dadurch **gekennzeichnet,**
daß allen n Prozessorelementen (PE) gleichzeitig parallel jeweils n Befehle zugeführt werden.

3. Verfahren nach Anspruch 1,
dadurch **gekennzeichnet,**
daß einem Prozessorelement (PE) unabhängig von anderen Prozessorelementen dann ein neuer Befehl zugeführt wird, wenn er den vorherigen bearbeitet hat.

4. Verfahren nach Anspruch 3,
dadurch **gekennzeichnet,**
daß die Priorität der Prozessorelemente in Abhängigkeit der Befehlsbearbeitung immer bei dem Prozessorelement liegt, die den in der Folge der Befehle frühesten Befehl verarbeitet.

5. Verfahren nach einem der vorhergehenden Ansprüche,
dadurch **gekennzeichnet,**
daß pro Taktschritt die Anzahl der aktiven Prozessorelemente variierbar ist und daß nicht aktive Prozessorelemente in Wartestellung gehen.

6. Verfahren nach einem der vorhergehenden Ansprüche,
dadurch **gekennzeichnet,**
daß bei zentralem Befehlswerk (IU) dieses die Befehle selektiert und ausgerichtet an die Prozessorelemente (PE) gibt.

7. Verfahren nach einem der vorhergehenden Ansprüche,
dadurch **gekennzeichnet,**
daß das Konfliktsignal im Befehlswerk (IU) nach teilweiser Befehlsvordecodierung erzeugt wird.

8. Verfahren nach einem der Ansprüche 1 bis 6,
dadurch **gekennzeichnet,**
daß das Konfliktsignal (K) in den Prozessorelementen (PE) erzeugt wird und den niederprioren Prozessorelementen zugeführt wird.

9. Verfahren nach einem der vorhergehenden Ansprüche,
dadurch **gekennzeichnet,**
daß bei Verzweigungsbefehlen der auf die Verzweigungsbedingung folgende erste Befehl des einen Zweiges in ein erstes Prozessorelement, der erste Befehl des anderen Zweiges in ein zweites Prozessorelement parallel geladen wird und dort parallel verarbeitet wird.

10. Verfahren nach einem der Ansprüche 1 bis 8,
dadurch **gekennzeichnet,**
daß bei bedingten Befehlen der auf den bedingten Befehl folgende Befehle des zweiten Zweiges in das niedrigstpriore Prozessorelement geladen wird.

11. Prozessor zur schnellen Bearbeitung der Befehle eines Programms,
- mit n (n ganze Zahl) in der Bearbeitungspriorität unterschiedlichen Prozessorelementen (PE) zur parallelen Beareitung der Befehle des Programms,
- mit mindestens einem Befehlswerk (IU), die den Prozessorelementen die Befehle zuführt,
- mit einer Cachespeichereinrichtung, die mit jedem Prozessorelement über Datenbusse verbunden ist,
- mit Mittel zur Erkennung der Abhängigkeit eines von einem Prozessorelement auszuführenden Befehls von einem vorher von einem Prozessorelement auszuführenden Befehl und zur Abgabe eines Konfliktsignales, wenn eine Abhängigkeit vorliegt.

12. Prozessor nach Anspruch 11,
dadurch **gekennzeichnet,**
daß jedes Prozessorelement (PE) mit mindestens einem Steuerspeicher (CS) verbunden ist, in dem die zum Betrieb der Prozessorelemente erforderlichen Mikroprogramme enthalten sind.

13. Prozessor nach Anspruch 11 oder 12,
dadurch **gekennzeichnet,**
daß jedes Prozessorelement (PE) mit einer Registerbank (RG) verbunden ist.

14. Prozessor nach einem der Ansprüche 11 bis 13,
dadurch **gekennzeichnet,**

daß am Eingang für die Konfliktsignale eines Prozessorelementes der Ausgang eines Multiplexers angeschlossen ist, an dem die Konfliktsignale anderer Prozessorelemente anliegen.

15. Prozessor nach einem der Ansprüche 11 bis 14,
dadurch **gekennzeichnet,**
daß die Konfliktsignale eines Prozessorelementes zumindest den nächsten zwei niederprioren Prozessorelementen direkt zugeführt werden.

# FIG 1

EP 0 477 597 A2

# FIG 2

# FIG 3

FIG 4

FIG 5